# EUROPÄISCHE PATENTSCHRIFT

(11) **EP 3 312 238 B1**
(45) Veröffentlichungstag und Bekanntmachung des Hinweises auf die Patenterteilung: **26.06.2019**
(21) Anmeldenummer: 16194568.8
(22) Anmeldetag: 19.10.2016
(51) Int. Cl.: C08L 67/02

(54) **POLYMERGEMISCHE ENTHALTEND POLYBUTYLENTEREPHTHALAT UND FORMTEILE AUS DIESEN**
POLYBUTYLENE TEREPHTHALATE CONTAINING POLYMER MIXES AND SHAPED ARTICLES MADE FROM SAME
MÉLANGE POLYMÈRE COMPRENANT DU TÉRÉPHTALATE DE POLYBUTYLÈNE ET PIÈCE MOULÉE EN ÉTANT CONSTITUÉE

(43) Veröffentlichungstag der Anmeldung: 25.04.2018
(73) Patentinhaber: ClickPlastics AG, 64625 Bensheim (DE)
(72) Erfinder: EBERLE, Wolfgang, 64625 Bensheim (DE)
(74) Vertreter: Leifert & Steffan Patentanwälte PartG mbB

(56) Entgegenhaltungen:
- EP-A1- 0 182 629
- EP-A1- 0 539 325
- CN-A- 103 740 063
- US-A- 5 049 603
- US-A1- 2007 129 475
- US-A1- 2011 098 388

## Beschreibung

Die vorliegende Erfindung betrifft Polymergemische enthaltend Polybutylenterephthalat (PBT) als Hauptbestandteil und die Verwendung der Polymergemische zur Herstellung von Formteilen, insbesondere Gehäusen. Die vorliegende Erfindung betrifft außerdem die Formteile, vor allem Gehäuse, insbesondere für den Automobil-Elektrik-Bereich. Die Erfindung betrifft auch aus den Polymergemischen hergestellte Gehäuse von Sensoren oder Gehäuse von Steckern, Steckverbindern und Steckverbindungssystemen. Des Weiteren betrifft die vorliegende Erfindung ein Verfahren zur Herstellung der Polymergemische und der daraus hergestellten Produkte.

Gerade im Bereich der Automobilausrüstung, insbesondere bei Formteilen für die Bordelektrik, jedoch nicht beschränkt auf dieses Gebiet, besteht ein anhaltender Bedarf an Kunststoffen, die hervorragende mechanische Eigenschaften besitzen, welche dauerhaft erhalten bleiben, die eine exzellente Verarbeitbarkeit aufweisen und deren Eigenschaftsprofil auch unter extremen Bedingungen, wie etwa tiefen und hohen Temperaturen, weitestgehend erhalten bleibt.

Zum Schutz elektrischer oder mechanischer Teile werden als Formteile Gehäuse, das heißt äußere Umhüllungen, eingesetzt. Gehäuse sind Bestandteile verschiedener Systeme. Beispielsweise bestehen sogenannte Steckverbinder aus einem oder mehreren Kontakten zum Anschluss von Leitern, wobei die Kontakte von einem Gehäuse aus Kunststoff umschlossen sind. Aber auch Sensoren, das heißt Detektoren, die physikalische Werte messen, werden in der Regel in ein für die Montage geeignetes Gehäuse eingebaut.

Gerade die Anforderungen an Steckverbinder beziehungsweise Steckverbindersysteme sind in den letzten Jahrzehnten kontinuierlich gestiegen. So hat die Anzahl der in einem Fahrzeug befindlichen Steckverbindungen erheblich zugenommen. In einem modernen Personenkraftwagen sind weit über 1000 Steckverbindungen zu finden. Die Qualitätsansprüche an diese sind erheblich gestiegen. Ein Ausfall eines Stromkreises ist nicht akzeptabel und gegebenenfalls sogar sicherheitsrelevant. Hinzu kommt, dass die zu übertragenen Leistungen angestiegen sind, was zur Folge hat, dass Kontaktsysteme näher an der Leistungsgrenze betrieben werden.

Der Wunsch das Fahrzeuggewicht und damit den Kraftstoffverbrauch und Kohlendioxidausstoß zu reduzieren, hat darüber hinaus zur Folge, dass kleinstmögliche Steckverbinder und Kabel mit möglichst geringem Querschnitt gewünscht werden, wobei hier durchaus auch Kosteneinsparungen eine Rolle spielen.

Aber auch vor dem eigentlichen Einsatz im Fahrzeug sind Steckverbindersysteme zunehmend erhöhten mechanischen Anforderungen ausgesetzt. So werden beispielsweise während der Herstellung eines Kabelsatzes für ein Kraftfahrzeug die Kabelenden, an denen sich die Stecker befinden, zum Teil geworfen. Die Kabelenden und damit auch die Steckverbinder treffen dann peitschenartig auf den Montagetisch oder den Boden. Die Steckverbinder müssen somit impulsartige mechanische Belastungen aufnehmen, ohne dass dabei Kunststoffteile zerbrechen oder sich die Verbindung zur Kabelummantelung löst. Aber auch beim Transport zum Konfektionär oder von dort zum Automobilwerk können signifikante, stoßartige Belastungen auf das Steckverbindersystem wirken.

Um Steckverbinder bezüglich der Widerstandsfähigkeit gegenüber diesen Belastungen zu qualifizieren, hat sich in Deutschland der sogenannte Trommeltest (PG 6 / B6.1 Trommeltest; Prüfrichtlinie für KFZ-Steckverbinder des Arbeitskreises der Automobilfirmen: LV 214, Stand März 2010) als Standard etabliert. Der Testaufbau besteht aus einer wohldefinierten, metallischen, drehbar gelagerten Trommel. Die zu prüfenden Steckverbinder werden in die Trommel gelegt, welche dann mit definierter Geschwindigkeit 30-mal rotiert wird. Die Steckverbinder fallen dann statistisch zufällig verteilt von oben nach unten und treffen dabei sowohl andere Steckverbinder, als auch die metallischen Flächen und Kanten der Trommel. Beschädigungen der Steckverbinder sind dabei nicht akzeptabel. Eine erhöhte Anforderung an das Kunststoffmaterial fordert, dass dieses den Trommeltest auch nach Alterung und/oder unterschiedlichen Temperatureinflüssen unbeschadet übersteht.

Besonderer Bedarf besteht an tieftemperaturbeständigen, eine hohe Schlagzähigkeit und einen geringen Verzug aufweisenden Polymergemischen, die sich vorzugsweise durch eine hohe Fließfähigkeit auszeichnen und auch in geringen Wandstärken, der aus diesen hergestellten Produkten, gute mechanische Eigenschaften, insbesondere eine hohe Kerbschlagzähigkeit aufweisen. Darüber hinaus sollen die Kunststoffe eine hervorragende Haftung an den aus dem Stand der Technik bekannten Kabelummantelungen, insbesondere auch solchen auf Basis thermoplastischer Polyurethane (TPU) und Polyvinylchlorid (PVC) besitzen und zu dimensionsstabilen, im Wesentlichen verzugfreien Formkörpern verarbeitbar sein.

Die obigen Aufgaben wurden durch Bereitstellung eines Polymergemischs und daraus hergestellter Formteile, wie insbesondere Gehäuse gelöst, wobei das Polymergemisch eine
Polymerkomponente A) enthaltend
i) 55 bis 80 Gew.-% eines oder mehrerer Polybutylenterephthalate,
ii) 5 bis 20 Gew.-% eines oder mehrerer Ester-Thermoplastelastomere,
iii) 10 bis 30 Gew.-% eines oder mehrerer Acrylsäureester-Styrol-Acrylnitril-Pfropfcopolymere
jeweils bezogen auf das Gesamtgewicht der Polymerkomponente A), und eine

Additivkomponente B) enthaltend einen oder mehrere der folgenden Bestandteile
iv) eine oder mehrere Arten von Glasfasern
v) eines oder mehrere Pigmente und/oder einen oder mehrere von den Glasfasern iv) verschiedene Füllstoffe, und
vi) ein oder mehrere Flammschutzmittel,
umfasst, und
die Polymerkomponente A) zu 50 bis 100 Gew.-%, vorzugsweise 60 bis 100 Gew.-% und die Additivkomponente B) zu 0 bis 50 Gew.-%, vorzugsweise 0 bis 40 Gew.-% jeweils bezogen auf das Gesamtgewicht des Polymergemischs im Polymergemisch enthalten ist und sich die Polymerkomponenten A) und B) zu mindestens 90 Gew.-% bezogen auf das Gesamtgewicht des Polymergemischs addieren.

Der Begriff "Polymergemisch" wie er hierin Verwendung findet ist weitgefasst und umfasst sowohl sogenannte "Polymerblends", welche Gemische von zwei oder mehr Polymeren darstellen, die nicht in einer besonderen Verarbeitungsform vorliegen, also auch sogenannte "Compounds", die neben den Polymeren Komponenten enthalten, die in einer besonderen Verarbeitungsform vorliegen, wie beispielsweise Glasfasern.

Unterschreitet der Gehalt des oder der Ester-Thermoplastelastomere 5 Gew.-% bezogen auf das Gesamtgewicht der Polymerkomponente A) so verliert das Polymergemisch an Kerbschlagzähigkeit und der Fähigkeit eine besonders starke Bindung mit Kabelummantelungsmaterialien wie Polyurethanelastomeren und Polyvinylchlorid einzugehen.

Übersteigt der Gehalt des oder der Ester-Thermoplastelastomere 30 Gew.-% so geht dies zu Lasten einer verringerten Wärmeformbeständigkeitstemperatur.

Ein besonders ausgewogenes Eigenschaftsprofil wird erreicht, wenn der Anteil des oder der Ester-Thermoplastelastomere bezogen auf das Gesamtgewicht der Polymerkomponente A) enthaltend die Bestandteile i) und ii) im Bereich von 10 bis 15 Gew.-%
liegt.

Die Polymerkomponente
A) enthält 10 bis 30 Gew.-% eines oder mehrerer Acrylsäureester-Styrol-Acrylnitril-Pfropfcopolymere, bezogen auf das Gesamtgewicht der Polymerkomponente A). Der Zusatz eines oder mehrerer Acrylsäureester-Styrol-Acrylnitril-Pfropfcopolymere zur Polymerkomponente A), verbessert ohne nachteilige Effekte die Verarbeitbarkeit des Polymergemischs überraschend und deutlich. So wird durch den Zusatz eines oder mehrerer Acrylsäureester-Styrol-Acrylnitril-Pfropfcopolymere zur Polymerkomponente A) die Schmelze-Massefließrate deutlich erhöht und im Spiralfluss-Test eine überraschend hohe Verbesserung im Fließverhalten, im Vergleich zu einer Polymerkomponente A), die kein Acrylsäureester-Styrol-Acrylnitril-Pfropfcopolymeres enthält, erreicht.

Besonders gute Ergebnisse, insbesondere auch hinsichtlich der Fließfähigkeit und Verarbeitbarkeit werden erhalten, wenn die Polymerkomponente A)
i) 55 bis 80 Gew.-% eines oder mehrerer Polybutylenterephthalate,
ii) 5 bis 20 Gew.-% eines oder mehrerer Ester-Thermoplastelastomere,
iii) 10 bis 30 Gew.-% eines oder mehrerer Acrylsäureester-Styrol-Acrylnitril-Pfropfcopolymere
jeweils bezogen auf das Gesamtgewicht der Polymerkomponente A), enthält.

In einem solchen Fall ist es besonders bevorzugt, wenn die Polymerkomponente A) aus,
i) 55 bis 80 Gew.-% eines oder mehrerer Polybutylenterephthalate,
ii) 5 bis 20 Gew.-% eines oder mehrerer Ester-Thermoplastelastomere,
iii) 10 bis 30 Gew.-% eines oder mehrerer Acrylsäureester-Styrol-Acrylnitril-Pfropfcopolymere
jeweils bezogen auf das Gesamtgewicht der Polymerkomponente A), besteht.

Wie oben angegeben addieren sich im Polymergemisch die Polymerkomponente A) und die Additivkomponente B) zu mindestens 90 Gew.-%, vorzugsweise zu mindestens 95 Gew.-% bezogen auf das Gesamtgewicht des Polymergemischs.

Die restlichen 0 bis 10 Gew.-% in Bezug auf das Gesamtgewicht des Polymergemischs ergeben sich aus der Möglichkeit weitere Zuschlagstoffe C), die von Bestandteilen der Polymerkomponente A) und den Bestandteilen der Additivkomponente B) verschieden sind, in das Polymergemisch einzuarbeiten. Insbesondere beim Einsatz eines oder mehrerer Acrylsäureester-Styrol-Acrylnitril-Pfropfcopolymere, welche Bestandteile iii) in der Polymerkomponente A) sind, können zusätzlich zur Polymerkomponente A) und Additivkomponente B) sogenannte Kompatibilisierer als Zuschlagstoffe eingesetzt werden, um die Verträglichkeit der Acrylsäureester-Styrol-Acrylnitril-Pfropfcopolymere iii) mit den Bestandteilen i) und ii) in der Polymerkomponente A) zu erhöhen. Hier haben sich insbesondere Polymere aus Arcylsäure- und/oder Methacrylsäureestern, umfassend Glycidylmethacrylate, als geeignete Zuschlagstoffe beziehungsweise Kompatibilisierer erwiesen. Unter die weiteren Zuschlagstoffe C) fallen aber beispielsweise auch lösliche Farbstoffe, Stabilisatoren wie Antioxidantien oder Lichtschutzmittel, Antistatika oder Prozesshilfsmittel wie beispielsweise Gleit- oder Trennmittel. Ergänzend kann hierzu auf die einschlägige Patentliteratur, wie beispielsweise die EP 0 539 325 A1 oder die DE 27 58 497 A1, verwiesen werden, worin weitere typische Zuschlagstoffe genannt werden.

Vorzugsweise bildet die Summe der Gewichtsteile der Polymerkomponente A) und der Additivkomponente B) 95 bis 100 Gew.-% des Gesamtgewichts des Polymergemischs.

### Bestandteil i) der Polymerkomponente A): Polybutylenterephthalate (PBT)

Als Bestandteil i) der Polymerkomponente A) werden Polybutylenterephthalate verwendet.

Bei den Polybutylenterephthalaten handelt es sich um teilkristalline thermoplastische Polyester aus der Gruppe der Polyalkylenterephthalate mit der Gruppierung 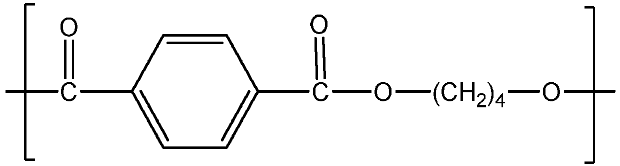 als charakteristisches Segment der Hauptkette.

Polybutylenterephthalate werden großtechnisch durch entweder nach dem DMT-Verfahren durch Umesterung von Dimethylterephthalat (DMT) mit 1,4-Butandiol und anschließender Polykondensation des dabei resultierenden Bis(4-Hydroxybutyl)terephthalsäureesters in Gegenwart von Umesterungskatalysatoren unter Abspaltung von 1,4-Butandiol hergestellt oder durch Direktveresterung von Terephthalsäure mit 1,4-Butandiol nach dem PTA-Verfahren ("PTA" steht hierin für "Purified Terephthalic Acid", "aufgereinigte Terephthalsäure"), welches sogar ohne den Einsatz eines Katalysators durchführbar ist.

Um hohe Molmassen zu erhalten, können die erhaltenen Produkte nachkondensiert werden, was mit einer Verringerung der Säurezahl einhergeht.

Prinzipiell sind alle üblichen großtechnisch erhältlichen Polybutylenterephthalate im Rahmen der vorliegenden Erfindung einsetzbar, wobei solche, die nach dem PTA-Verfahren hergestellt werden, üblicherweise über eine höhere thermische Statiblität und Hydrolysestabilität verfügen und daher vorteilhaft sind.

Kommmerziell sind entsprechende Polybutylenterephthalate unter den Handelsbezeichungen Ultradur® von der Firma BASF SE (Ludwigshafen, Deutschland), Pocan® von der Firma Lanxess Deutschland GmbH (Köln, Deutschland) oder Crastin® von der Firma DuPont de Nemours erhältlich.

### Bestandteil ii) der Polymerkomponente A): Ester-Thermoplastelastomere (TPE-E)

Die Ester-Thermoplastelastomere (auch als thermoplastischer Polyester-Elastomere bezeichnet) gehören zur Gruppe der thermoplastischen Elastomere (TPE), die auch als thermoplastische Kautschuke bezeichnet werden. Im Idealfall kombinieren sie die Gebrauchseigenschaften von Elastomeren und die Verarbeitungseigenschaften von Thermoplasten. Dies wird typischerweise erreicht, indem in den entsprechenden Kunststoffen Blöcke aus weichen, das heißt elastischen Segmenten mit niedriger Glasübergangstemperatur, sowie Blöcke aus harten, kristallisierbaren Segmenten mit geringer Dehnbarkeit, hoher Glasübergangstemperatur und Neigung zur Assoziatbildung vorliegen.

Thermoplastelastomere (TPE) können verschiedensten Polymerklassen angehören. Beispiele hierfür sind Styrol-Oligoblock-Copolymere (TPE-S), thermoplastische Olefine (TPE-O), thermoplastische Polyurethane (TPE-U), thermoplastische Copolyamide (TPE-A) sowie Ester-Thermoplastelastomere (TPE-E).

Die im Rahmen der vorliegenden Erfindung einsetzbaren Thermoplastelastomere sind solche auf der Basis von Estern und werden daher auch als Ester-Thermoplastelastomere oder thermoplastischer Polyester-Elastomere oder kurz als TPE-E bezeichnet.

Der Hauptvertreter der Ester-Thermoplastelastomere ist ein Multiblockcopolymer mit harten Blöcken aus Polybutylenterephthalat und weichen Blöcken aus Poly(polytetrahydrofuran)terephthalat.

Die blockbildenden Segmente dieser, in der vorliegenden Erfindung bevorzugt einsetzbaren Ester-Thermoplastelastomere, lassen sich durch folgende Struktur 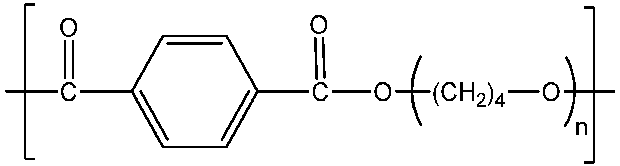 wiedergeben. Die harten Blöcke werden durch Segmente mit n = 1 gebildet und entsprechen denen des Polybutylenterephthalats, während die weichen Blöcke durch Segmente gebildet werden, bei welchen n deutlich höher als 1 ist, wie beispielsweise n = 10 bis 20 oder typischerweise n = 12 bis 16.

Auch die Ester-Thermoplastelastomere lassen sich ausgehend von DMT oder PTA synthetisieren. Als Diol wird neben dem für die harten Blöcke verantwortlichen 1,4-Butandiol auch das für die weichen Blöcke verantwortliche Polytetrahydrofuran HO[(CH₂)₄O]ₙH eingesetzt, wobei der Index n dem entsprechenden Index im oben grafisch dargestellten Segment entspricht.

Prinzipiell sind alle üblichen großtechnisch erhältlichen Ester-Thermoplastelastomere im Rahmen der vorliegenden Erfindung einsetzbar, wobei solche, die nach dem PTA-Verfahren hergestellt werden, üblicherweise über eine höhere thermische Statiblität und Hydrolysestabilität verfügen und daher vorteilhaft sind.

Kommmerziell sind entsprechende Ester-Thermoplastelastomere unter den Handelsbezeichungen Hytrel® von der Firma DuPont de Nemours und Arnitel® von der Firma DSM Engineering Plastics B.V. (Sittard, Niederlande) erhältlich.

### Bestandteil iii) der Polymerkomponente A): Acrylsäureester-Styrol-Acrylnitril-Pfropfcopolymere

Acrylsäureester-Styrol-Acrylnitril-Pfropfcopolymere (ASA) sind mit Acrylester-Kautschuk schlagzäh modifizierte Styrol-Acrylnitril-Copolymere (SAN). Die Elastomerkomponente ist in Form sehr kleiner Partikel gleichmäßig im SAN-Gerüst verteilt, was in der Regel zu einem Werkstoff mit hoher Steifigkeit und Zähigkeit führt.

Die Herstellung geht gewöhnlich von einem Poly(butylacrylat)-Kautschuk aus, der mittels Emulsionspolymerisation hergestellt wird. Er besitzt üblicherweise eine uni- oder bimodale Teilchengrößenverteilung. Es können jedoch auch andere Poly(C₁₋₆-alkylacrylat)-Kautschuke eingesetzt werden.

Um einen ausreichend hohen Pfropfungsgrad bei der nachfolgenden Pfropfungsreaktion zu erreichen, wird als Pfropfgrundlage typischerweise: a) ein Terpolymer aus n-Butylacrylat, Vinylmethylether und Butadien, b) ein n-Butylacrylat-Butadien-Copolymer oder c) ein Copolymer aus n-Butylacrylat und einem Monomer, welches als Vernetzungs- oder Pfropfzentrum wirkt, gewählt.

Neben dem Butylacrylat können auch andere Acrylsäureester beim Aufbau der Elastomerkomponente verwendet werden.

Im nächsten Schritt erfolgt eine Pfropfung der Styrol-Acrylnitril-Monomerenmischung auf obige Pfropfgrundlage. Dies erfolgt durch Polymerisierung der Monomerenmischung in Gegenwart der Pfropfgrundlage.

Typische ASA-Terpolymere enthalten in polymerisierter Form 10 bis 35 Gew.-%, insbesondere 15 bis 35 Gew.-% Acrylnitril, 5 bis 40 Gew.-%, insbesondere 5 bis 30 Gew.-% eines Acrylsäureesters und 30 bis 80 Gew.-%, insbesondere 40 bis 60 Gew.-% Styrol. Styrol kann im Rahmen der Erfindung bezüglich der ASA-Polymere ganz oder teilweise auch durch alpha-Methylsytrol ersetzt sein.

ASA sind bereits seit den 1970er Jahren auf dem Markt erhältlich. Prinzipiell können alle großtechnisch erhältlichen ASA im Rahmen der vorliegenden Erfindung verwendet werden. Kommerziell sind entsprechende ASA beispielsweise unter den Handelsbezeichnungen Luran® S von der Firma Ineos Styrosolution Ludwigshafen GmbH (Ludwigshafen, Deutschland) und Starex® von der Firma Lotte Advanced Materials erhältlich.

### Bestandteil iv) der Additivkomponente B): Glasfasern

Die Glasfasern dienen im Wesentlichen als Verstärkungsfasern und können in den Anwendungen eingesetzt werden, die eine besonders hohe Steifigkeit und/oder Kerbschlagzähigkeit benötigen. Prinzipiell sind alle gängigen Glaserfasermaterialien, die im vorliegenden technischen Bereich Verwendung finden geeignet. Als bevorzugt haben sich sogenannte E-Glasfasern ("E" steht für "electric") und Fasern aus Borosilikatglas erwiesen.

Vorzugsweise beträgt der Anteil an Glasfasern iv) in der Additivkomponente B) 20 bis 100 Gew.-%, besonders bevorzugt 20 bis 80 Gew.-% und ganz besonders bevorzugt 20 bis 60 Gew.-%, jeweils bezogen auf das Gesamtgewicht der Additivkomponente B).

Bezogen auf das Gesamtgewicht des erfindungsgemäßen Polymergemischs beträgt der Gehalt an Glasfasern iv) vorzugsweise 5 bis 50 Gew.-%, besonders bevorzugt 10 bis 40 Gew.-% und ganz besonders bevorzugt 10 bis 30 Gew.-%.

Die Glasfasern besitzen vorzugsweise einen Faserdurchmesser ≤ 13 µm, besonders bevorzugt einen Faserdurchmesser von 6 bis 12 µm, ganz besonders bevorzugt einen Faserdurchmesser von 6 bis 10 µm. Die Faserdurchmesser können auf einfache Weise mikroskopisch bestimmt werden.

Vorzugsweise besitzen die Glasfasern eine Länge im Bereich einiger Millimeter, vorzugsweise liegt deren Länge im Bereich von 2 bis 20 mm, besonders bevorzugt 2 bis 10 mm und ganz besonders bevorzugt im Bereich 4 bis 8 mm, insbesondere bei 6 mm.

Vorzugsweise liegen die Glasfasern in beschichteter Form, vorzugsweise silanisierter Form vor. Als Silane zur Beschichtung von Glasfasern können insbesondere Alkoxysilane eingesetzt werden.

Wird hierin ein gewichtsprozentualer Anteil an Glasfasern angegeben, so bezieht er sich bei unbeschichteten Glasfasern auf das Gewicht der unbeschichteten Glasfasern und im Falle der beschichteten Glasfasern auf das Gewicht der beschichteten Glasfasern. Analoges gilt für die obigen Faserdurchmesser.

### Bestandteil v) der Additivkomponente B): Pigmente und/oder von den Glasfasern iv) verschiedene Füllstoffe

Die Polymergemische können organische und/oder anorganische Pigmente enthalten, je nach gewünschter Farbe des daraus herzustellenden Formteils. Beispiele für geeignete Pigmente sind Ruße, Titandioxid, Ultramarinblau oder Phthalocyanine. Die Pigmente können in Form von Vormischungen als sogenannter Mastermix mit einem oder mehreren Bestandteilen der Polymerkomponente A), insbesondere dem Bestandteil i) der Polymerkomponente A) in die Polymermischung eingearbeitet werden. Ist dies der Fall, so wird der Anteil an Polymerkomponente A) im Mastermix hierin nicht als Pigmentbestandteil betrachtet, sondern vollständig prozentual dem jeweiligen Bestandteil der Polymerkomponente A) zugerechnet, während nur das Pigment als solches im Mastermix prozentual der Additivkomponente B) zugerechnet wird. Entsprechendes gilt für den Fall, dass die von den Glasfasern iv) verschiedenen, im Folgenden beschriebenen Füllstoffe in Form eines Mastermix zum Einsatz kommen.

Neben den als Bestandteil iv) aufgeführten Glasfasern können auch von diesen verschiedene faser- und/oder pulverförmige Füllstoffe in den Polymergemischen der vorliegenden Erfindung enthalten sein. Beispiele für derartige anorganische Füllstoffe sind amorphe Kieselsäuren, Quartz, Silikate wie Calciumsilikat, Aluminiumsilikat, Talkum, Micro-Mica, Wollastonit, Kaoline, Glimmer und Feldspat oder Carbonate, wie Magnesiumcarbonat und Sulfate, wie Bariumsulfat.

Ein Beispiel für einen bevorzugten organischen Füllstoff ist Cellulose, insbesondere nanokristalline Cellulose, welche beispielsweise unter der Bezeichnung Nanolinter® (siehe: www.nanolinter.com) erhältlich ist. Letztgenannte Materialien lassen sich durch ein hydrolytisches Spaltungsverfahren aus Cellulose erhalten. Die erhaltenen kristallinen Teilchen besitzen typischerweise Längenausdehnungen im Bereich von 80 bis 300 nm und Breitenausdehnungen in Bereich von 2 bis 80 nm (jeweils mittels Transmissionselektronenmikroskopie bestimmt) beziehungsweise mittlere Kristallgrößen im Bereich von 80 bis 600 nm (bestimmt mittels dynamischer Lichtstreuung), sowie einen Kristallinitätsgrad von typischerweise über 95 % (bestimmbar mittels Röntgenbeugung nach dem Segal-Verfahren).

Vorzugsweise werden Pigmente, jedoch keine von den Glasfasern verschiedene Füllstoffe zugesetzt.

Vorzugsweise beträgt der Anteil an Pigmenten und/oder von den Glasfasern iv) verschiedenen Füllstoffen in der Additivkomponente B) 1 bis 10 Gew.-%, besonders bevorzugt 1 bis 8 Gew.-% und ganz besonders bevorzugt 1 bis 5 Gew.-%, jeweils bezogen auf das Gesamtgewicht der Additivkonponente B). Vorgenannte prozentuale Bereiche gelten insbesondere auch dann, wenn nur Pigmente und keine von den Glasfasern iv) verschiedene Füllstoffe eingesetzt werden.

Bezogen auf das Gesamtgewicht des erfindungsgemäßen Polymergemischs beträgt der Gehalt an Pigmenten und/oder von den Glasfasern iv) verschiedenen Füllstoffen vorzugsweise 0,5 bis 6 Gew.-%, besonders bevorzugt 1 bis 4 Gew.-% und ganz besonders bevorzugt 2 bis 3 Gew.-%. Vorgenannte prozentuale Bereiche gelten insbesondere auch dann, wenn nur Pigmente und keine von den Glasfasern iv) verschiedene Füllstoffe eingesetzt werden.

### Bestandteil vi) der Additivkomponente B): Flammschutzmittel

Als Flammschutzmittel können prinzipiell alle üblichen Flammschutzmittel eingesetzt werden. Vorteilhaft ist es jedoch umweltfreundliche, möglichst halogenfreie Flammschutzmittel einzusetzen. Eine ökologisch verträgliche Alternative zu halogenhaltigen Flammschutzmitteln stellen phosphorhaltige Flammschutzmittel dar, wie beispielsweise Aluminiumdiethylphosphinat, welches beispielsweise von der Firma Clariant SE (Muttenz, Schweiz) als Exolit OP erhältlich ist und häufig in Kombination mit Melaminpolyphosphat Verwendung findet. Ebenfalls einsetzbar sind Melamin-Metallphosphate der Firma Floridienne Chinie SA (Ath, Belgien), die unter der Bezeichnung Safire erhältlich sind und auch synergistisch mit Aluminiumdiethylphosphinat einsetzbar sind. Auch einsetzbar sind anorganische Phosphinate wie beispielsweise Aluminiumhydrophosphit (Phoslite der Firma Italmatch Chemicals S.p.A., Genua, Italien).

Vorzugsweise beträgt der Anteil an Flammschutzmitteln vi) in der Additivkomponente B) 20 bis 100 Gew.-%, besonders bevorzugt 20 bis 80 Gew.-% und ganz besonders bevorzugt 30 bis 50 Gew.-%, jeweils bezogen auf das Gesamtgewicht der Additivkomponente B).

Bezogen auf das Gesamtgewicht des erfindungsgemäßen Polymergemischs beträgt der Gehalt an den Flammschutzmitteln vi) vorzugsweise 5 bis 35 Gew.-%, besonders bevorzugt 10 bis 30 Gew.-% und ganz besonders bevorzugt 15 bis 25 Gew.-%.

### Herstellung der Polymergemische und Compoundierung

Die Polymergemische, die aus der Polymerkomponente A) bestehen, werden üblicherweise durch Schmelzmischen der vorgebildeten Bestandteile i), ii) und iii) der Polymerkomponente A) hergestellt. Hierbei werden die Bestandteile in Form von feinteiligen Pulvern und/oder Granulaten auf Walzenstühlen, in Knetern oder vorzugsweise mittels Extrudern vermischt. Dies erfolgt oberhalb der Glas- bzw. Schmelztemperaturen unter starken Scherfeldern auf die dem Durchschnittsfachmann bekannte Art und Weise.

Im Zuge der Herstellung der Polymergemische, die auch ein oder mehrere Bestandteile der Additivkomponente B) und der Zuschlagstoffkomponente C) enthalten, werden diese Bestandteile üblicherweise mit den feinteiligen Pulvern und/oder Granulaten der Bestandteile der Polymerkomponente A) innig vermischt, gefolgt vom Aufschmelzen der Polymerkomponente A) oder in die geschmolzene Masse der Polymerkomponente A) mit nachfolgender Vermischung dieser eingebracht. So werden in der Regel die Glasfasern dem Extruder durch eine seitliche Zuführung nach dem Aufschmelzen der Polymerkomponente der geschmolzenen Masse zugeführt. Die Bestandteile der Polymerkomponente A), der Additivkomponente B) und der Zuschlagstoffkomponente C) können jeweils einzeln oder als Vormischung eingesetzt werden. Hierbei können Vormischungen der Bestandteile der Polymerkomponente A), der Additivkomponente B) und der Zuschlagstoffkomponente C) vorliegen, beispielsweise Mischungen verschiedener Pigmente oder Füllstoff der Additivkomponente B) oder es können komponentenübergreifende Vormischungen eingesetzt werden, beispielsweise Mischungen von PBT (Bestandteil i) der Komponente A)) mit Pigmenten (Bestandteil v) der Additivkomponente B)), wie oben als Mastermix beschrieben. Die homogene Compoundmasse wird anschließend abgekühlt und in bekannter Weise granuliert. Das granulierte Polymergemisch wird dann zu den erfindungsgemäßen Formteilen verarbeitet.

Ergänzend kann hierzu auf die einschlägige Patentliteratur, wie beispielsweise die EP 0 539 325 A1 oder die DE 27 58 497 A1, insbesondere deren experimentelle Abschnitte verwiesen werden, worin typische Bedingungen für die Herstellung von Polymergemischen und deren Compoundierung sowie der Herstellung von Formteilen beschrieben sind. Die dort beschriebene Vorgehensweise lässt sich auf die vorliegende Erfindung übertragen.

### Erfindunasaemäße Formteile

Weiterer Gegenstand der Erfindung sind Formteile, die aus den erfindungsgemäßen Polymergemischen hergestellt werden.

Der Begriff des "Gehäuses" ist im Sinne dieser Erfindung eine äußere Umhüllung zum Schutz elektrischer und/oder mechanische Teile, wobei jedoch Kabelummantelungen nicht als Gehäuse anzusehen sind. Der Begriff "Kabel" bedeutet hierin die Zusammenstellung eines oder mehrerer elektrischer Leiter und/oder optischer Fasern mit einer schützenden Umhüllung.

Der Begriff des "Steckverbinders" steht hierin für eine Einheit umfassend ein oder mehrere Kontakte und ein Gehäuse, zum Anschluss von Leitern, für den Zweck, eine Verbindung mit einem passenden Gegenstecker herzustellen oder zu lösen.

Typische im Kraftfahrzeugsektor eingesetzte Steckverbinder sind beispielsweise sogenannte Wire-to-Wire-Steckverbinder, Wire-to-Board-Steckverbinder, Airbag-Steckverbinder, Steckverbinder für Verriegelungssysteme und mediendichte Verbindungen, Steckverbinder für Hochvoltanwendungen, Einpresskontakte oder Stitchkontakte.

Der Begriff des "Sensors" steht hierin für einen Detektor, der physikalische Werte misst. Der Sensor ist in ein für die Montage geeignetes Gehäuse eingebaut und kann als Funktionseinheit angesehen werden, die ein Signal erzeugt, welches einer gemessenen Größe entspricht.

Typische im Kraftfahrzeugsektor eingesetzte Sensoren sind beispielsweise Positionssensoren, deren Aufgabe unter anderem darin besteht, die Drosselklappenstellung, Fahr- und Bremspedalstellung, Weg- und Winkelpositionen in Dieseleinspritzpumpen, den Füllstand in Kraftstoffbehältern oder den Lenk- oder Neigungswinkel zu bestimmen. Daneben gibt es Drehzahl- und Geschwindigkeitssensoren, um die Kurbelwellen- und Nockenwellendrehzahlen, die Dieseleinspritzpumpendrehzahlen oder Raddrehzahlen zu bestimmen.

Beschleunigungssensoren erfassen die Beschleunigung der Karosserie und kommen in passiven Sicherheitssystemen (Airbag, Gurtstraffer, Überrollbügel), Fahrdynamiksystemen oder der Fahrwerksregelung zum Einsatz. Drucksensoren wiederum erfassen den Saug- beziehungsweise Ladedruck, den Kraftstoff-, Brems- und Reifendruck, den Hydraulikvorratsdruck bei Antiblockiersystemen und Servolenkung, den Kältemitteldruck oder Modulationsdruck bei Automatikgetrieben. Temperatursensoren messen die Ansaug- beziehungsweise Ladelufttemperatur, die Umgebungs- und Innenraumtemperatur, die Verdampfertemperatur der Klimaanlage, die Kühlwasser- und Motoröltemperatur oder die Kraftstofftemperatur und Reifenlufttemperatur. Darüber hinaus gibt es Kraft- und Drehmomentsensoren zur Messung der Pedalkraft, Antriebskraft, Brems- und Lenkmomente oder des Gewichts der Fahrzeuginsassen. Gassensoren wiederum erfassen die Zusammensetzung des Abgases (Lamdasonde, NOx-Sensor) oder erkennen Schadstoffe in der Frischluftzufuhr. Durchflussmesser erfassen die Menge des geförderten Kraftstoffs und die angesaugte Luftmenge.

Allen vorgenannten speziellen Formteilen ist gemein, dass diese Gehäuse darstellen oder solche umfassen. Insbesondere Gehäuse mit Dimensionen im Bereich weniger Zentimeter, vorzugsweise mit einer längsten Dimension von kleiner 20 cm, vorzugsweise kleiner 10 cm oder besonders bevorzugt kleiner 5 cm lassen sich mit den Polymergemischen der vorliegenden Erfindung in einfacher Weise herstellen.

Die Außen- und Innenwände dieser Formteile lassen sich aufgrund des hervorragenden Fließverhaltens mit sehr geringen Wandstärken produzieren.

Besonders bevorzugt herstellbar sind Formteile, welche Wände besitzen, die Wandstärken von ≤ 0,3 mm, vorzugsweise 0,15 bis 0,3 mm oder 0,2 bis 0,3 mm, mindestens in flächigen Teilbereichen der Wände aufweisen. Vorzugsweise besitzt mindestens eine Wand über die gesamte Wandfläche eine der vorgenannten Wandstärken.

Trotz der geringen Wandstärken besitzen die Formteile, insbesondere die Gehäuse, vorzugsweise die Stecker, Steckverbinder oder Steckverbindersysteme sowie die Sensorengehäuse hervorragende mechanische Eigenschaften wie beispielsweise eine hervorragende Charpy-Kerbschlagzähigkeit und einen äußerst geringen Verzug.

### Herstellung der erfindunasaemäßen Formteile

Die Verarbeitung der erfindungsgemäßen Polymergemische ist grundsätzlich mit allen für Thermoplaste bekannten Verfahren möglich.

Die Herstellung der erfindungsgemäßen Formteile erfolgt in der Regel im Spritzgussverfahren. Zur Herstellung einfacher Formteile und Halbzeuge kann jedoch auch das Extrusionsverfahren eingesetzt werden.

Wenngleich die erfindungsgemäßen Polymergemische in ihrer Hydrolysestabilität gegenüber herkömmlichen Polybutylenterephthalaten verbessert sind, empfiehlt es sich den Feuchtegehalt während des Aufschmelzens so gering wie möglich zu halten.

Als Plasifiziereinheit in der Spritzgießverarbeitung eignen sich besonders gut flachgeschnittene Mehrzonenschnecken, beispielsweise Dreizonenschnecken. Diese gewährleisten eine geringe Verweilzeit und gleichmäßige Temperaturverteilung in der Schmelze. Wird der Bestandteil iv) der Additivkomponente eingesetzt, so ist es vorteilhaft besonders verschleißarme Stähle für Zylinder, Schnecke und Rückstromsperre einzusetzen.

Als Werkzeuge können sowohl konventionelle Kaltverteiler als auch Heißkanalsysteme, insbesondere außenbeheizte Systeme, verwendet werden.

Es ist vorteilhaft bei Schneckenumfanggeschwindigkeiten kleiner 20 m/min, vorzugsweise kleiner 15 m/min und Staudrücken unterhalb von 100 bar mit einem ansteigenden Temperaturprofil am Zylinder zu arbeiten.

Der Massetemperaturbereich sollte vorzugsweise im Bereich von 225 bis 280 °C, besonders bevorzugt im Bereich von 230 bis 260 °C liegen.

Die Werkzeugoberflächentemperaturen sollen vorzugsweise von 40 bis 90 °C bei unverstärkten Materialien und von 60 bis 80 °C bei verstärkten Materialien, insbesondere glasfaserverstärkten Materialien, liegen.

Im Folgenden soll die Erfindung anhand von Ausführungsbeispielen weiter erläutert werden.

### BEISPIELE

### Falltest in der Trommel nach PG 6 /B6.1 Trommeltest; Prüfrichtlinie für KFZ-Steckverbinder des Arbeitskreises der Automobilfirmen: LV214, Stand März 2010

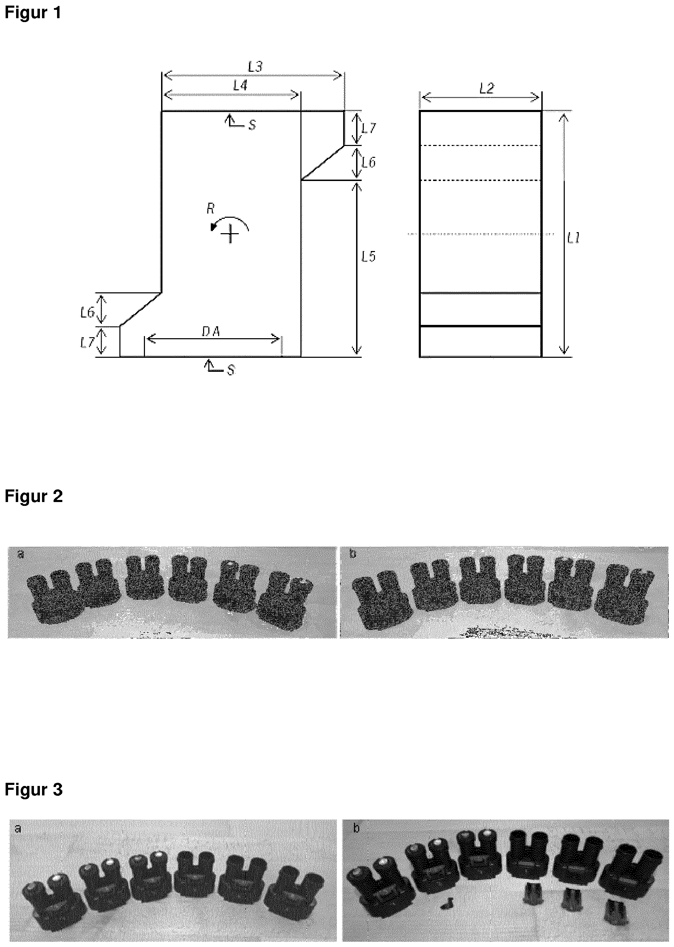

Der Testaufbau besteht aus einer wohl definierten, metallischen, drehbar gelagerten Trommel. In Figur 1 sind der Aufbau und die Dimensionen der für den Falltest in der Trommel verwendeten Trommel aufgeführt. Zur Prüfung der Gehäusestabilität und der Verriegelungen wurden die erfindungsgemäßen und nicht erfindungsgemäßen Gehäuse (jeweils 6 Gehäuse; Leitungen wurden direkt hinter dem Gehäuse abgeschnitten) getrennt in der Trommel geprüft (siehe DIN EN 60068-2-31). Die Gehäuse wurden in die Trommel gelegt, welche mit einer definierten Geschwindigkeit 30-mal (bei den Gehäusen aus 80 Gewichtsteilen PBT, 10 Gewichtsteilen TPE-E und 10 Gewichtsteilen Glasfasern) beziehungsweise 10-mal (bei den nicht erfindungsgemäßen Gehäusen aus 90 Gewichtsteilen PBT und 10 Gewichtsteilen Glasfasern) rotiert wurde. Die Rotationsgeschwindigkeit wurde so gewählt, dass alle Teile in der Fallzone (Drop Area; DA) auftrafen (Dicke der Stahlplatte in der Fallzone ≥ 5 mm). Dies war bei einer Rotationsgeschwindigkeit von etwa 3 Umdrehungen pro Minute der Fall. Die Gehäuse fielen dabei statistisch zufällig verteilt von oben nach unten und trafen dabei sowohl andere Gehäuse, als auch die metallischen Flächen und Kanten der Trommel.
Die Anforderung gemäß der LV-214-Prüfvorschrift besagt, dass sich die Sekundärverriegelung in Vorraststellung bei der Simulation des Transports unbestückter Gehäuse beim Falltest nicht schließen darf und dass sich die Sekundärverriegelung in Endraststellung bei der Simulation des Transports bestückter Gehäuse nicht öffnen darf.

Die Ergebnisse der Falltests sind in den Figuren 2 und 3 (nicht erfindungsgemäß) dargestellt.

Die in Figur 2 verwendeten Gehäuse wurden aus einem Polymergemisch aus 80 Gewichtsteilen Polybutylenterephthalat (PBT), 10 Gewichtsteilen Ester-Thermoplastelastomer (TPE-E) und 10 Gewichtsteilen Glasfasern hergestellt. Figur 2a zeigt die Gehäuse vor dem Test, Figur 2b die gleichen Gehäuse nach dem Test.

Die in Figur 3 verwendeten nicht erfindungsgemäßen Gehäuse wurden aus einem Polymergemisch aus 90 Gewichtsteilen Polybutylenterephthalat (PBT) und 10 Gewichtsteilen Glasfasern hergestellt. Figur 3a zeigt die Gehäuse vor dem Test, Figur 3b die gleichen Gehäuse nach dem Test.

Wie den Figuren 2b und 3b entnehmbar ist, haben die TPE-E enthaltenden Gehäuse den Test selbst nach 30 Trommelumdrehungen schadlos überstanden, während die anderen nicht erfindungsgemäßen Gehäuse bereits nach 10 Umdrehungen beschädigt waren. In Figur 3b sind im Vordergrund abgebrochene funktionsrelevante Teile zu sehen.

### Charpy-Kerbschlagzähigkeit nach ISO 179/1eA (23°C)

Ein Maß für die Belastbarkeit des Kunststoffmaterials gegenüber mechanischen, impulsartigen Energieeinträgen stellt die Charpy-Kerbschlagzähigkeit nach ISO 179/1eA (gemessen bei 23 °C) dar. Je höher der gemessene Wert (gemessen in kJ/m²) ist, desto besser kann der Kunststoff die Energieeinträge unbeschadet absorbieren.

Das auch im Falltest (Figur 2) eingesetzte, Kunststoffmaterial besaß eine Charpy-Kerbschlagzähigkeit von 8,5 kJ/m², während das ebenfalls im Falltest (Figur 3) eingesetzte andere nicht erfindungsgemäße Kunststoffmaterial lediglich eine Charpy-Kerbschlagzähigkeit von 4 kJ/m² besaß. Dies zeigt, dass bereits der Austausch einer vergleichsweise geringen Menge an PBT durch TPE-E eine drastische Verbesserung der mechanischen Belastbarkeit mit sich bringt.

### Spiralfluss-Test

Der Spiralfluss-Test stellt eine Möglichkeit dar, die Fließfähigkeit einer geschmolzenen Kunststoffformulierung zu charakterisieren und korreliert in der Regel gut mit der Schmelze-Massefließrate und der Schmelze-Volumenfließrate.

Im Spiralfluss-Test wird durch Einspritzen eines geschmolzenen Materials in eine spiralförmige Hohlform die zurückgelegte Strecke des geschmolzenen Materials, bis dieses erstarrt, bestimmt. Die zurückgelegte Strecke kann mit anderen geschmolzenen Materialien, die unter gleichen Bedingungen getestet wurden, direkt verglichen werden. Je länger die zurückgelegte Strecke ist, desto fließfähiger und formbarer ist das Material.

Mit diesem Test wurde ein erfindungsgemäßes Polymergemisch und ein nicht erfindungsgemäßes Polymer untersucht (Injektionsdruck: 1000bar). Die Zusammensetzungen und Meßergebnisse der Prüf-Formulierungen sind in folgender Tabelle 1 angeben:

**Tabelle 1**

| **Bestandteile (in Gewichtsteilen)** | **Vergleichsbeispiel** | **erfindungsgemäßes Beispiel** |
|---|---|---|
| PBT | 90 | 60 |
| TPEE | - | 10 |
| ASA | - | 20 |
| Glasfasern | 10 | 10 |
| **Spirallänge (in % bezogen auf den Vergleich)** | 100 | 186 |

Wie aus Tabelle 1 ersichtlich ist, besitzt das erfindungsgemäße Beispiel eine deutlich verbesserte Fließfähigkeit, ausgedrückt durch eine deutlich erhöhte Spirallänge. Während der Austausch eines Teils des PBT durch TPEE bereits wie oben gezeigt zu einer deutlichen Verbesserung der mechanischen Eigenschaften führt (Trommeltest), führt ein weiterer Austausch von PBT durch ASA zusätzlich zu einer stark verbesserten Verarbeitbarkeit, welche es ermöglich selbst dünnwandige Formteile mit hervorragenden mechanischen Eigenschaften zu erhalten.

### Bezugszeichenliste

### Figur 1:

L1 = 1200 mm
L2 = 500 mm
L3 = 700 mm
L4 = 50 mm
L5 = 1000 mm
L6 = 100 mm
L7 = 100 mm
S = Stahl
R = Rotation
DA = Drop Area (Fallbereich)

## Patentansprüche

1. Polymergemisch, wobei das Polymergemisch eine
Polymerkomponente A) enthaltend
i) 55 bis 80 Gew.-% eines oder mehrerer Polybutylenterephthalate,
ii) 5 bis 20 Gew.-% eines oder mehrerer Ester-Thermoplastelastomere,
iii) 10 bis 30 Gew.-% eines oder mehrerer Acrylsäureester-Styrol-Acrylnitril-Pfropfcopolymere
jeweils bezogen auf das Gesamtgewicht der Polymerkomponente A), und eine
Additivkomponente B) enthaltend einen oder mehrere der folgenden Bestandteile
iv) eine oder mehrere Arten von Glasfasern,
v) eines oder mehrere Pigmente und/oder einen oder mehrere von den Glasfasern iv) verschiedene Füllstoffe, und
vi) ein oder mehrere Flammschutzmittel,
umfasst, und
die Polymerkomponente A) zu 50 bis 100 Gew.-% und
die Additivkomponente B) zu 0 bis 50 Gew.-%, jeweils bezogen auf das Gesamtgewicht des Polymergemischs in dem Polymergemisch enthalten ist, und die Summe der Polymerkomponente A) und der Additivkomponente B) mindestens 90 Gew.-% bezogen auf das Gesamtgewicht des Polymergemischs beträgt.

2. Polymergemisch nach Anspruch 1, wobei dieses bezogen auf das Gesamtgewicht des Polymergemischs 5 bis 50 Gew.-% an Glasfasern iv) enthält.

3. Polymergemisch nach Anspruch 2, wobei die Glasfasern einen Faserdurchmesser zwischen 6 und 13 µm und/oder eine Faserlänge von 2 bis 20 mm besitzen.

4. Polymergemisch nach einem der Ansprüche 1 bis 3, wobei das oder die Ester-Thermoplastelastomere mindestens zwei Arten von Blöcken mit folgenden Segmenten enthalten 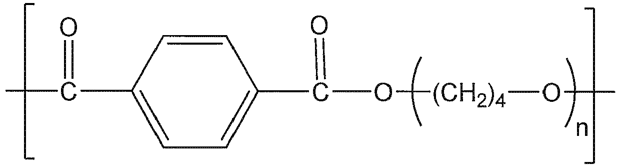 wobei für die eine Art von Blöcken n = 1 gilt und für die mindestens zweite Art von Blöcken n = 10 bis 20 gilt.

5. Polymergemisch nach einem der Ansprüche 1 bis 4, wobei dieses bezogen auf das Gesamtgewicht des Polymergemischs 5 bis 35 Gew.-% an Flammschutzmitteln vi) enthält.

6. Verfahren zur Herstellung eines Polymergemischs gemäß einem der Ansprüche 1 bis 5, wobei die Bestandteile der Polymerkomponente A) und soweit vorhanden der Additivkomponente B) und einer Zuschlagstoffkomponente C) miteinander im Schmelzmischververfahren vermischt werden und nach Abkühlen granuliert werden.

7. Formteil, **dadurch gekennzeichnet, dass** dieses aus einem Polymergemisch gemäß einem der Ansprüche 1 bis 5 besteht.

8. Formteil gemäß Anspruch 7, wobei dieses ein Gehäuse ist.

9. Formteil gemäß Anspruch 8, wobei das Gehäuse gewählt ist aus der Gruppe von Gehäusen für Stecker, Steckverbinder, Steckverbindersysteme und Sensoren.

10. Formteil gemäß einem der Ansprüche 7 bis 9, wobei dieses Wände besitzt, die Wandstärken von ≤ 0,3 mm mindestens in flächigen Teilbereichen der Wände aufweisen.

11. Verfahren zur Herstellung der Formteile wie sie in den Ansprüchen 7 bis 10 definiert sind, wobei das Polymergemisch im Spritzgussverfahren verarbeitet wird.

## Claims

1. Polymer mixture, the polymer mixture comprising
a polymer component A) containing
i) 55 to 80 % by weight of one or more polybutylene terephthalates,
ii) 5 to 20 % by weight of one or more ester thermoplastic elastomers,
iii) 10 to 30 % by weight of one or more acrylic acid ester-styrene-acrylonitrile graft copolymers,
in each case based on the total weight of the polymer component A), and an additive component B) containing one or more of the following ingredients iv) one or more types of glass fibres,
v) one or more pigments and/or one or more fillers different from the glass fibres iv), and
vi) one or more flame retardants,
and wherein
the polymer component A) is contained in the polymer mixture in an amount of 50 to 100 % by weight and
the additive component B) is contained in an amount of 0 to 50 % by weight, in each case based on the total weight of the polymer mixture, and the sum of the polymer component A) and the additive component B) is at least 90 % by weight based on the total weight of the polymer mixture.

2. The polymer mixture according to claim 1, wherein it contains 5 to 50 % by weight of glass fibres iv) based on the total weight of the polymer mixture.

3. The polymer mixture according to claim 2, wherein the glass fibres have a fibre diameter between 6 and 13 µm and/or a fibre length of 2 to 20 mm.

4. The polymer mixture according to any one of claims 1 to 3, wherein the ester thermoplastic elastomers contain at least two types of blocks with the following segments 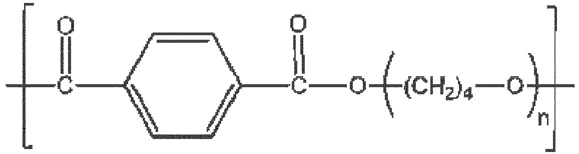 wherein for one type of blocks n = 1 and for the at least second type of blocks n = 10 to 20.

5. The polymer mixture according to any one of claims 1 to 4, wherein it contains 5 to 35 % by weight of flame retardants iv) based on the total weight of the polymer mixture.

6. A method for the production of a polymer mixture according to any one of claims 1 to 5, wherein the ingredients of the polymer component A) and, if present, the additive component B) and an aggregate component C) are mixed by a melt-mixing process and granulated after cooling down.

7. A formed article, **characterised in that** it consists of a polymer mixture according to any one of claims 1 to 5.

8. The formed article according to claim 7, the formed article being a housing.

9. The formed article according to claim 8, wherein the housing is selected from the group comprising housings for plugs, connectors, connector systems and sensors.

10. The formed article according to any one of claims 7 to 9, the article having walls with wall thicknesses of ≤ 0.3 mm at least in the planar subsections of the walls.

11. A method for the production of the formed articles as defined in claims 7 to 10, wherein the polymer mixture is processed in an injection molding process.

## Revendications

1. Mélange de polymères, le mélange de polymères comprenant un composant polymérique A) contenant
i) de 55 à 80 % en poids d'un ou plusieurs téréphtalates de polybutylène,
ii) de 5 à 20 % en poids d'un ou plusieurs élastomères thermoplastiques d'esters,
iii) 10 à 30 % en poids d'un ou plusieurs copolymères greffés d'ester de l'acide acrylique-styrène-acrylonitrile
respectivement par rapport au poids total du composant polymérique A), et un composant d'additif B) contenant un ou plusieurs des ingrédients suivants :
iv) un ou plusieurs types de fibres de verre,
v) un ou plusieurs pigments et/ou un ou plusieurs agents de remplissage différents des fibres de verre iv), et
vi) un ou plusieurs agents ignifuges,
et
le composant polymérique A) étant contenu dans le mélange de polymères en une quantité de 50 à 100 % en poids et
le composant d'additif B) étant contenu en une quantité de 0 à 50 % en poids, respectivement par rapport au poids total du mélange de polymères, et la somme du composant polymérique A) et du composant d'additif B) comportant au moins 90 % en poids par rapport au poids total du mélange de polymères.

2. Mélange de polymères selon la revendication 1, le mélange contenant de 5 à 50 % en poids de fibres de verre iv) par rapport au poids total du mélange de polymères.

3. Mélange de polymères selon la revendication 2, les fibres de verre ayant un diamètre de fibre entre 6 et 13 µm et/ou une longueur de fibre de 2 à 20 mm.

4. Mélange de polymères selon l'une quelconque des revendications 1 à 3, dans lequel le ou les élastomères thermoplastiques d'esters contiennent au moins deux types de blocs avec les segments suivants : 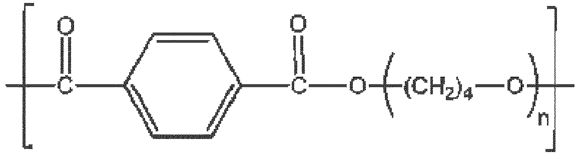 où n = 1 pour l'un type de blocs, et n = 10 à 20 pour l'au moins un second type de blocs.

5. Mélange de polymères selon l'une quelconque des revendications 1 à 4, le mélange contenant de 5 à 35 % en poids d'agents ignifuges iv) par rapport au poids total du mélange de polymères.

6. Procédé pour la fabrication d'un mélange de polymères selon l'une quelconque des revendications 1 à 5, les ingrédients du composant polymérique A) et le cas échéant du composant d'additif B) et un composant agrégé C) sont mélangés dans un procédé de mélange par fusion et puis granulés après refroidissement.

7. Pièce moulée, **caractérisée en ce qu'**elle est constituée d'un mélange de polymères selon l'une quelconque des revendications 1 à 5.

8. Pièce moulée selon la revendication 7, la pièce étant un boîtier.

9. Pièce moulée selon la revendication 8, le boîtier étant choisi dans le groupe constitué par boîtiers pour fiches, connecteurs, systèmes de connecteurs et capteurs.

10. Pièce moulée selon l'une quelconque des revendications 7 à 9, la pièce ayant des parois avec des épaisseurs de paroi de ≤ 0,3 mm au moins dans les portions plates des parois.

11. Procédé pour la fabrication des pièces moulées comme définies dans les revendications 7 à 10, dans lequel le mélange de polymères est travaillé dans un procédé de moulage par injection.
